Europäisches Patentamt

European Patent Office

Office européen des brevets

(11) Veröffentlichungsnummer: **0 179 973**
**A1**

## (12) EUROPÄISCHE PATENTANMELDUNG

(21) Anmeldenummer: **85103340.7**

(51) Int. Cl.⁴: **A 22 C 17/00**

(22) Anmeldetag: **22.03.85**

(30) Priorität: **31.10.84 DE 3439888**

(43) Veröffentlichungstag der Anmeldung: **07.05.86**
**Patentblatt 86/19**

(84) Benannte Vertragsstaaten: **AT BE CH DE FR GB IT LI LU NL SE**

(71) Anmelder: **REBRAGO Fleisch-Handels-GmbH, Siedlung "Klein-Hamburg" Parz. 25, D-2215 Gokels (DE)**

(72) Erfinder: **Garber, Peter-Carl, Clarholzer Strasse 17, D-4834 Harsewinkel (DE)**

(74) Vertreter: **Nickels, Heinz, Dipl.-Ing. Dr.-Ing., Detmolder Strasse 26 Postfach 6207, D-4800 Bielefeld 1 (DE)**

(54) **Verfahren und Vorrichtung zur Gewinnung hoch-proteinhaltiger Fleischbestandteile aus Grieben.**

(57) Zur Gewinnung hoch-proteinhaltiger Fleischbestandteile aus den bei der industriell betriebenen Fettschmelze anfallenden Grieben, werden verfahrensgemäß die Grieben in Form von Naßgrieben gegen eine durchbrochene Separierfläche (1) gedrückt, wobei die weichen hoch-proteinhaltigen Griebenbestandteile (Fleisch) durch die Separierfläche (1) hindurchgedrückt und anschließend tiefgefroren werden und die festen (harten) Griebenbestandteile vor der Separierfläche (1) verbleiben und abgeführt werden.

Die Vorrichtung zur Durchführung des Verfahrens weist eine durchbrochene Separierfläche und eine die Grieben unter Trennung der weichen von den harten Bestandteilen der Grieben mit einstellbarem Druck gegen diese Separierfläche (1) pressende, nicht-durchbrochene Druckfläche (4) auf, die mit der Separierfläche (1) einen trichterförmigen Einlauf (10) für die Grieben bildet.

- 1 -

Verfahren und Vorrichtung zur Gewinnung hoch-proteinhaltiger
Fleischbestandteile aus Grieben

Die Erfindung bezieht sich auf ein Verfahren und eine Vorrichtung zur Gewinnung hoch-proteinhaltiger Fleischbestandteile aus den bei der industriell
betriebenen Fettschmelze anfallenden Grieben.

Die bei der industriell betriebenen Fettschmelze anfallenden Grieben werden
bisher ohne Trennung der noch vorhandenen weichen Bestandteile, nämlich
des Fleisches, von den festen (harten) Bestandteilen für die Tierfutterherstellung verwendet, wodurch ein großer Verlust an noch für den Menschen
verwertbaren, hoch-proteinhaltigen Fleischbestandteilen gegeben ist, was
wirtschaftlich gesehen nicht vertretbar ist.

Deshalb ist es Aufgabe der Erfindung, ein Verfahren zu schaffen, mit dem
die noch verwertbaren hoch-proteinhaltigen Fleischbestandteile von den festen
Bestandteilen der Grieben in einfacher Weise getrennt und somit zum menschlichen und wirtschaftlichen Nutzen weiterverarbeitet werden können.

Diese Aufgabe wird erfindungsgemäß dadurch gelöst, daß die Grieben in
Form von Naßgrieben maschinell gegen eine durchbrochene Separierfläche
gedrückt werden, wobei die weichen hoch-proteinhaltigen Griebenbestandteile (Fleisch) durch die Separierfläche hindurchgedrückt und anschließend
tiefgefroren werden und die festen (harten) Griebenbestandteile vor der
Separierfläche verbleiben und abgeführt werden.

Der Trennvorgang von weichen und harten Griebenbestandteilen erfolgt vorzugsweise bei einer Temperatur von 60 bis 70° C der Grieben und das Einfrieren der gewonnenen hoch-proteinhaltigen Griebenbestandteile wird bei einer Temperatur von ca. minus 200° C vorgenommen und dabei vorzugsweise durch Flüssigstickstoff.

Weiterhin ist es Aufgabe der Erfindung, eine einfach aufgebaute und sicher arbeitende Vorrichtung zu schaffen, mit der das Separieren der weichen von den festen Griebenbestandteilen in rationeller Weise durchführbar ist.

Diese Aufgabe wird durch eine durchbrochene Separierfläche und eine die Grieben unter Trennung der weichen von den festen Bestandteilen mit einstellbarem Druck gegen die Separierfläche pressende, nichtdurchbrochene Druckfläche gelöst, die mit der Separierfläche einen trichterförmigen Einlauf für die Grieben bildet.

In bevorzugter Weise kann die Separierfläche von einer Lochtrommel und einem dieser gegenläufigen, endlosen Druckband mit zugeordnetem Andrückorgan gebildet sein, wobei die Lochtrommel ,mit Druckband den trichterförmigen Einlauf im oberen Bereich bilden, in der Lochtrommel eine Förderschnecke zum Transport der in das Trommelinnere hineingedrückten weichen Griebenbestandteile zu einem Froster angeordnet und dem Druckband im Abstand zum Separierbereich ein die festen Griebenbestandteile vom Druckband abschabender Abstreifer zugeordnet ist.

Durch das erfindungsgemäße Verfahren und die Vorrichtung werden die bisher nicht für den menschlichen Gebrauch verwerteten Grieben separiert, d.h., die weichen und hoch-proteinhaltigen Griebenbestandteile (das Fleisch) werden von den harten Griebenbestandteilen automatisch getrennt und diese weichen Griebenbestandteile lassen sich dann für die Verarbeitung zu Nahrungsmitteln, wie Wurstwaren, Fertigsuppen od. dgl. nutzen, so daß dadurch die Abfallprodukte äußerst gering gehalten und die noch verwertbaren Bestandteile voll ausgenutzt werden.
Hierdurch ist für den Menschen und für die Wirtschaft ein großer Nutzen entstanden.

Die ausgeschiedenen, kein Fleisch mehr besitzenden, festen Griebenbestandteile werden wie bisher weiter zur Tierfutterherstellung verwendet, so daß durch das Separieren die Grieben vollkommen für zwei wertvolle Verwendungen genutzt werden.

Die Vorrichtung ist einfach aufgebaut und zeigt eine sichere und rationelle Arbeitsweise.

Anhand der Zeichnungen werden nachfolgend Ausführungsbeispiele gemäß der Erfindung näher erläutert. Es zeigt:

Fig. 1    eine schematische Seitenansicht einer Vorrichtung zum Separieren der festen und weichen Bestandteile von Grieben, mit einer Lochtrommel und einem endlos umlaufenden Druckband,

Fig. 2    eine Draufsicht im teilweisen Schnitt auf die Lochtrommel mit Förderschnecke und nachgeschaltetem Froster,

Fig. 3    eine schematische Teilansicht einer Vorrichtung in weiterer Ausführung mit zwei Druckbändern,

Fig. 4    eine schematische Teilansicht einer Vorrichtung in weiterer Ausführung mit zwei Druckplatten.

Die bei der industriell betriebenen Fettschmelze anfallenden Grieben, welches nichtschmelzende Bestandteile im Rinder- oder Schweinefett sind, enthalten weiche Bestandteile, nämlich hoch-proteinhaltiges Fleisch, und feste (harte) Bestandteile, und zwar Sehnen, Bindegewebeteile, Knorpel und sonstige Rückstände.

Diese anfallenden Grieben werden erfindungsgemäß direkt beim Austritt aus der Fettschmelze in Form von Naßgrieben übernommen und gegen eine durchbrochene Separierfläche 1, 2, 3 gedrückt, wobei die weichen Griebenbestandteile durch die Separierfläche 1, 2, 3 hindurchgedrückt und somit von den festen Bestandteilen getrennt werden; diese weichen Bestandteile werden anschließend tiefgefroren. Die festen Griebenbestandteile verbleiben vor der Separierfläche 1, 2, 3 und werden abgeführt.

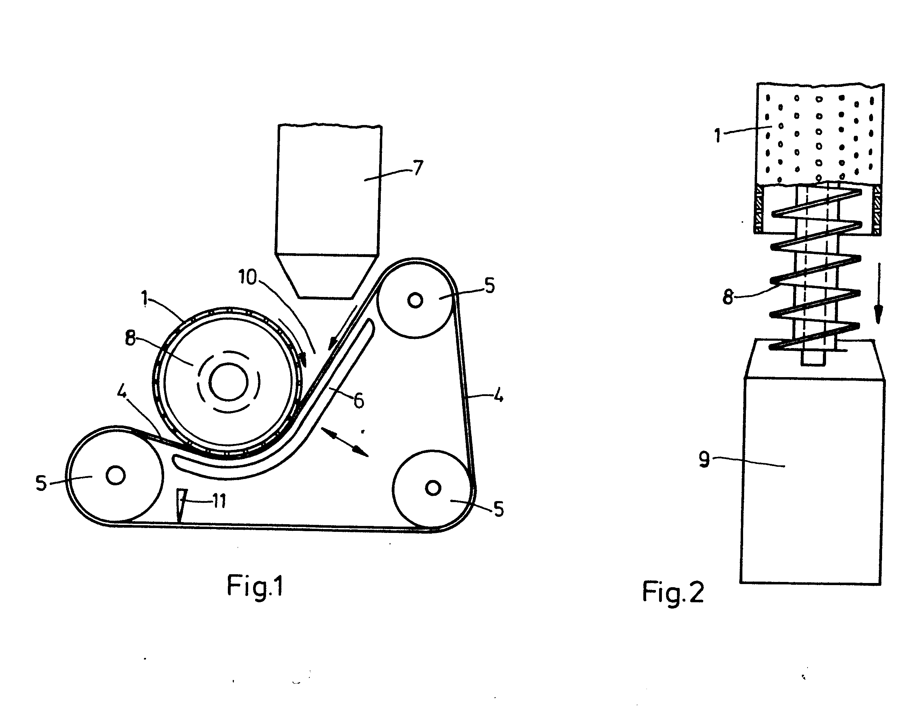

Für die Durchführung dieses Verfahrens ist eine Vorrichtung in Form eines Separators vorgesehen, die gemäß Ausführungsbeispiel nach Fig. 1 und 2 aus einer Lochtrommel 1, welche die Separierfläche darstellt, und einem

- 5 -

endlos über mehrere Umlenkrollen 5 umlaufenden Druckband, vorzugsweise Kunststoffband, gebildet ist. Die zylindrische Lochtrommel 1 ist mit Bohrungen in Durchmesserbereichen von 3, 5 bis 8 mm ausgestattet. Der an der Lochtrommel 1 anliegende Bereich des Druckbandes 4 steht unter der Einwirkung eines Andrückorganes 6, dessen Druck variabel (einstellbar) ist. Die Grieben werden über eine Förderschnecke od. dgl. und einem Trichter 7 in den trichterförmigen Einlauf 10 zwischen der um eine waagerechte Achse sich drehenden Trommel 1 und dem schräg nach unten und in Richtung Trommel 1 verlaufenden Bereich des Druckbandes 4 eingegeben.

Im Inneren der Lochtrommel 1 ist eine Förderschnecke 8 angeordnet, die die separierten weichen Bestandteile direkt einem Froster 9 (einer Tiefkühleinrichtung) zuführt, in dem die weichen Bestandteile durch Flüssigstickstoff, Kohlensäure od. dgl. bei ca. minus 200°C tiefgefroren werden.

Der Arbeitsvorgang mit dieser vorbeschriebenen Vorrichtung ist folgender:

Die Naßgrieben kommen mit einer Temperatur von 60 bis 70° C in den Einlauf 10. Durch das entgegen der Trommel-Drehrichtung umlaufende Druckband 4 werden die Grieben eingezogen und das Druckband 4 preßt diese mit Hilfe des Andrückorganes 6 gegen die Lochtrommel 1. Hierdurch erfolgt das Separieren, indem die weichen Bestandteile durch die Löcher der Trommel 1 hindurchgedrückt werden und in das Trommelinnere gelangen, während die festen (harten) Bestandteile vor der Lochtrommelwandung verbleiben und dann durch das Druckband 4 abgefördert, d.h., an der Lochtrommel 1 vorbei nach unten geführt und dort von dem Druckband 4 durch einen Abstreifer 11 abgeschabt und vom Band 4 abgeführt werden. Wegen ihres hohen Proteingehaltes müssen die so gewonnenen weichen Bestandteile schnellstens heruntergekühlt und zur besseren Haltbarkeit eingefroren werden; die im Trommelinnern liegenden weichen Bestandteile werden deshalb von der Förderschnecke 8 direkt einem Froster 9 zugeführt, in dem der Tiefgefriervorgang erfolgt. Hierdurch werden auch die sich sonst schnell entwickelnden Keime vermieden.

Die so gewonnenen reinen Fleischbestandteile finden die verschiedensten Anwendungen. Insbesondere eignen sie sich für die Herstellung von Wurstwaren und für die Herstellung von Fertiggerichten, insbesondere Suppen.

Die ausgeschiedenen harten Bestandteile werden, wie bisher, für die Herstellung von Tierfutter genutzt.

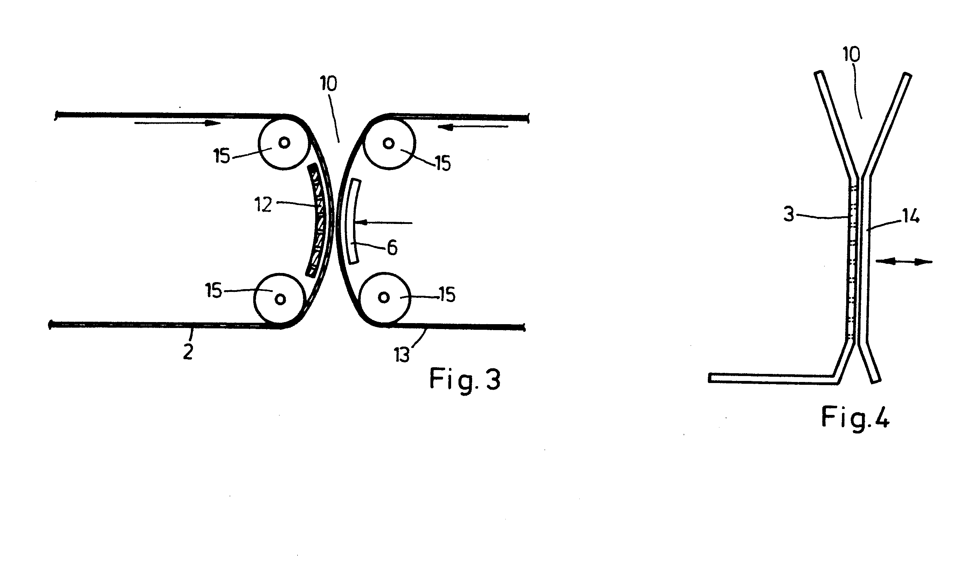

Gemäß der weiteren Ausführung der Vorrichtung nach Fig. 3 weist diese zwei endlos und gegenläufig um Umlenkrollen 15 umlaufende Druckbänder 2, 13 auf, von denen das Druckband 2 gelocht ist und die Separierfläche bildet. Im zusammenwirkenden Bandbereich, im Anschluß an den Einlauf 10 für die Grieben, ist hinter dem gelochten Druckband 2 eine gelochte Widerlagerfläche 12 und hinter dem ungelochten Druckband 11 ein in der Druckkraft einstellbares Andrückorgan 6 angeordnet. Die Grieben werden, entsprechend dem vorbeschriebenen Verfahrensablauf, separiert und tiefgefroren, wobei die weichen Bestandteile durch das gelochte Druckband 2 und dessen gelochten Widerlagerfläche 12 hindurchgedrückt und dann dem Froster 9 zugeführt werden.

Fig. 4 zeigt eine weitere Ausführung der Vorrichtung, bei der die Separierfläche 3 von einer Lochplatte gebildet ist, die mit einer gegenüber dieser hin- und herbewegbaren ungelochten Druckplatte 14 zusammenwirkt, so daß die oben in den trichterförmigen Einlauf 10 zugeführten Grieben durch Druck der Platte 13 gegen die Separierfläche 3, welche feststehend ist, separiert und dabei die weichen Bestandteile durch die Lochplatte 3 hindurch gedrückt und dann dem Froster 9 zugeführt werden.

Die festen Bestandteile fallen zwischen den beiden Bändern 2, 13 bei Fig. 3 und zwischen den Platten 3, 14 bei Fig. 4 nach unten weg.

Patentansprüche

1.  Verfahren zur Gewinnung hoch-proteinhaltiger Fleischbestandteile aus den bei der industriell betriebenen Fettschmelze anfallenden Grieben, dadurch gekennzeichnet, daß die Grieben in Form von Naßgrieben gegen eine durchbrochene Separierfläche (1,2,3) gedrückt werden, wobei die weichen hoch-proteinhaltigen Griebenbestandteile (Fleisch) durch die Separierfläche (1,2,3) hindurchgedrückt und anschließend tiefgefroren werden und die festen (harten) Griebenbestandteile vor der Separierfläche (1,2,3) verbleiben und abgeführt werden.

2.  Verfahren nach Anspruch 1, dadurch gekennzeichnet, daß der Trennvorgang von weichen und harten Griebenbestandteilen bei der Temperatur von 60 bis 70° C der Grieben vorgenommen wird.

3.  Verfahren nach Anspruch 1, dadurch gekennzeichnet, daß das Einfrieren der hoch-proteinhaltigen Griebenbestandteile bei der Temperatur von ca. minus 200° C und vorzugsweise mittels Flüssigstickstoff erfolgt.

4.  Vorrichtung zur Durchführung des Verfahrens nach Anspruch 1 und 2, gekennzeichnet durch eine durchbrochene Separierfläche (1,2,3) und eine die Grieben unter Trennung der weichen von den harten Bestandteilen der Grieben mit einstellbarem Druck gegen diese Separierfläche (1,2,3) pressende, nichtdurchbrochene Druckfläche (4,13,14), die mit der Separierfläche (1,2,3) einen trichterförmigen Einlauf (10) für die Grieben bildet.

5.  Vorrichtung nach Anspruch 4, dadurch gekennzeichnet, daß die Separierfläche (1) von einer um eine waagerechte Achse drehbaren Lochtrommel und die Druckfläche (4) von einem gegenläufig zur Lochtrommel über Umlenkrollen (5) endlos umlaufenden, mit der Lochtrommel obenseitig den trichterförmigen Einlauf (10) bildenden Druckband gebildet ist, wobei dem Druckband (4) im Separierbereich ein gegenüber der Lochtrommel (1) im Anpreßdruck einstellbares Andrückorgan (6) zugeordnet ist, und innerhalb der Lochtrommel (1) eine die in das Trommelinnere hineingedrückten weichen Griebenbestandteile einem Froster (9) zuführende Förderschnecke (8) angeordnet und dem Druckband (4) hinter dem Separierbereich ein die harten Griebenbestandteile vom Druckband (4) abschabender Abstreifer (11) zugeordnet ist (Fig. 1 und 2).

6. Vorrichtung nach Anspruch 4, dadurch gekennzeichnet, daß die Separierfläche (2) von einem endlos umlaufenden gelochten Druckband mit im Separierbereich zugeordneter, gelochter Widerlagerfläche (12) und die Druckfläche (13) von einem ungelochten, endlos umlaufenden Druckband mit im Separierbereich - der Widerlagerfläche (12) gegenüberliegend - zugeordnetem, im Anpreßdruck einstellbaren Andrückorgan (6) gebildet ist, wobei die beiden gegenläufig umlaufenden Bänder (2,13) obenseitig einen trichterförmigen Einlauf (10) bilden (Fig. 3).

7. Vorrichtung nach Anspruch 4, dadurch gekennzeichnet, daß die Separierfläche (3) von einer Lochplatte und die Druckfläche (14) von einer gegenüber dieser Lochplatte (14) hin- und herbewegbaren, ungelochten Druckplatte gebildet ist und beide Platten (3,14) obenseitig einen trichterförmigen Einlauf (10) bilden (Fig. 4).

8. Vorrichtung nach den Ansprüchen 4 bis 7, dadurch gekennzeichnet, daß die Durchtrittsöffnungen in den Separierflächen (1,2,3) von Löchern mit einem Durchmesser von 3, 5 bis 8 mm gebildet sind.

Fig.2

Fig.1

Fig.4

Fig.3

Europäisches
Patentamt

EUROPÄISCHER RECHERCHENBERICHT

0179973
Nummer der Anmeldung

EP 85 10 3340

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | US-A-3 734 000 (ZIENER) <br> * Anspruch 1 * | 1,4,5 | A 22 C 17/00 |
| X | DE-B-2 159 465 (BAADER) <br> * Insgesamt * | 1,4,5 | |
| X | AU-A- 417 460 (KURIHARA) <br><br> * Insgesamt * | 1,4,5, 8 | |
| X | DE-C-3 143 474 (BAADER) <br> * Insgesamt * | 1,4,5 | |
| X | DE-A-2 032 774 (BAADER) <br> * Insgesamt * | 1,4,5 | |
| X | DE-A-2 064 403 (BAADER) <br> * Insesamt * | 1,4,6 | RECHERCHIERTE SACHGEBIETE (Int. Cl.4) <br><br> A 22 C |
| X | US-A-3 612 128 (BECK) <br> * Spalte 4, Zeilen 1-22 * | 1,4,5 | |
| A | DE-C- 57 088 (GRETHER) | | |
| A | CH-A- 537 154 (WEHRLE-WERK) | | |

Der vorliegende Recherchenbericht wurde für alle Patentansprüche erstellt.

| Recherchenort | Abschlußdatum der Recherche | Prüfer |
|---|---|---|
| DEN HAAG | 22-01-1986 | DE LAMEILLEURE D. |